# EUROPÄISCHE PATENTSCHRIFT

(11) **EP 1 099 891 B1**
(45) Veröffentlichungstag und Bekanntmachung des Hinweises auf die Patenterteilung: **19.11.2003**
(21) Anmeldenummer: 00118765.7
(22) Anmeldetag: 30.08.2000
(51) Int. Cl.: F16J 15/08

(54) **Mehrschichtige Zylinderkopfdichtung**
Multi-layered cylinder head gasket
Joint de culasse à couches multiples

(30) Priorität: 10.11.1999 DE 19954099
(43) Veröffentlichungstag der Anmeldung: 16.05.2001
(73) Patentinhaber: Federal-Mogul Sealing Systems GmbH, 57562 Herdorf (DE)
(72) Erfinder: Stapel, Klaus, 57562 Herdorf (DE); Retiere, Alain, 57562 Herdorf (DE); Audibert, Fabrice, 57562 Herdorf (DE)
(74) Vertreter: Becker Kurig Straus

(56) Entgegenhaltungen:
- EP-A- 0 533 357
- DE-A- 19 654 283

## Beschreibung

Die vorliegende Erfindung betrifft eine mehrlagige Zylinderkopfdichtung mit zumindest einer ersten und einer zweiten Funktionslage, die jeweils eine Vollsicke gegenüberliegend zu einer Brennraumöffnung in der Zylinderkopfdichtung aufweisen, und mit zumindest einer Distanzlage. Die Scheitelpunkte der Vollsicken der Außenlagen weisen in eine gemeinsame Richtung. Eine derartige Zylinderkopfdichtung ist beispielsweise aus der DE 196 54 283 bekannt.

Aus der JP 6-85964 sind mehrlagige Zylinderkopfdichtungen bekannt, wobei eine fünflagige Zylinderkopfdichtung eine mittig angeordnete Stopperlage und zu beiden Seiten der Stopperlage jeweils zwei mit je einer Vollsicke versehene Funktionslage hat. Die Vollsicken der Funktionslagen weisen zum Inneren der Zylinderkopfdichtung. Aus der U.S. 5,588,657 gehen mehrlagige Zylinderkopfdichtungen hervor, die zwei Funktionslagen als Außenlagen haben. Zwischen den Außenlagen sind eine Distanzlage und eine Stopperlage angeordnet. Die Vollsicken der Funktionslagen weisen ins Innere der Zylinderkopfdichtung. Aus der DE 196 54 283 gehen Zylinderkopfdichtungen hervor, die mehrlagig sind. Eine Ausgestaltung dieser Zylinderkopfdichtungen weist vier Lagen auf, wobei die Außenlagen Funktionslagen mit Vollsicken sind. Die Scheitelpunkte der Vollsicken können entweder jeweils nach außen oder aber nach innen weisen. Auch ist aus der Beschreibung zu dieser Ausgestaltung bekannt, daß die Vollsicken parallel zueinander angeordnet werden können. Das bedeutet, die Scheitelpunkte dieser Vollsicken weisen in die gleiche Richtung. Zwischen den beiden Außenlagen sind weiterhin eine Distanzlage wie auch eine Stopperlage angeordnet.

Aufgabe der vorliegenden Erfindung ist es, eine Zylinderkopfdichtung zu schaffen, die eine hohe Federrate zur Verfügung stellt, so daß eine dynamische Auffederung des Zylinderkopfes infolge hoher Verbrennungsdrücke mittels der Zylinderkopfdichtung kompensiert werden kann.

Diese Aufgabe wird mit einer mehrlagigen Zylinderkopfdichtung gemäß den Merkmalen des Anspruches 1 gelöst. Vorteilhafte Weiterbildungen sind in den abhängigen Ansprüchen angegeben.

Eine erfindungsgemäße mehrlagige Zylinderkopfdichtung hat
- zumindest eine erste und eine zweite Funktionslage, die jeweils eine Vollsicke gegenüberliegend zu einer Brennraumöffnung in der Zylinderkopfdichtung aufweisen, und
- zumindest eine Distanzlage,
wobei die Scheitelpunkte der Vollsicken der ersten und der zweiten Funktionslage in eine gemeinsame Richtung weisen. Die Zylinderkopfdichtung hat desweiteren den folgenden Lagenaufbau aus mindestens fünf Lagen:
- zuerst die erste Funktionslage, anschließend
- eine Stopperlage, dann
- eine dritte Funktionslage mit einer Vollsicke, dann
- die Distanzlage und anschließend
- die zweite Funktionslage,
wobei die Vollsicken mit ihrem jeweiligen Scheitelpunkt radial übereinander fluchtend angeordnet sind. Dieser Aufbau bewirkt eine hohe Linienpressung zur sicheren Abdichtung eines Brennraumes einer Verbrennungskraftmaschine. Die Erhöhung wird durch eine Steigerung der Federrate gegenüber anderen mehrlagigen Zylinderkopfdichtungen erzielt, indem die dritte Funktionslage ebenfalls in der Lage ist, eine Spannung zu erzeugen und die Funktionslagen untereinander über die Stopper- bzw. Distanzlage getrennt werden. Damit eignet sich diese Zylinderkopfdichtung insbesondere für Motorkonzepte, bei denen der Verbrennungsdruck weiter erhöht werden soll.

Die Anordnung der Distanzlage bzw. der Stopperlage zwischen den Funktionslagen hat mehrere Vorteile:
- Dadurch, daß die Distanzlage zwischen der zweiten und der dritten Funktionslage eingebettet ist, wird ein höherer Verformungsgrad und ein Warmsetzverlust der innenliegenden dritten Funktionslage bei Betrieb der Verbrennungskraftmaschine reduziert.
- Weiterhin werden die Verformungsgrade und die Warmsetzverluste aller drei Funktionslagen harmonisiert. Der Aufbau der Zylinderkopfdichtung ermöglicht, daß eine Verformung der Zylinderkopfdichtung im Einbaupunkt vergleichmäßigt wird. Gleichzeitig wird bei Betrieb der Verbrennungskraftmachine durch diese Vergleichmäßigung bewirkt, daß ein dynamisches Auffedern ebenfalls vergleichmäßigt mittels aller Lagen der Zylinderkopfdichtung kompensiert wird.
- Zusätzlich ermöglicht dieser Lagenaufbau der Zylinderkopfdichtung, daß ein bei Belastung der Zylinderkopfdichtung auftretender Versatz von Kontaktpunkten von Sickenfüßchen der zweiten wie auch der dritten Funktionslage mittels der Distanzlage ausgeglichen wird.

Eine Linienpressung der Zylinderkopfdichtung wird insbesondere dadurch erhöht, daß die Linienpressung, die mittels der dritten Funktionslage erzeugt wird, höher ist, als bei konventionellen Auslegungen ohne eine Stopperlage/Distanzlage zwischen den einzelnen Funktionslagen. Dazu wird vorzugsweise ein gegenüber den Vollsicken der ersten und der zweiten Funktionslage geringerer Warmsetzverlust eingestellt. Auf diese Weise wird auch sichergestellt, daß eine Leckage zwischen der dritten Funktionslage und der Stopperlage beziehungsweise zwischen der dritten Funktionslage und der zweiten Funktionslage vermieden wird.

Eine bevorzugte Ausgestaltung der Zylinderkopfdichtung hat die erste und die zweite Funktionslage jeweils als Außenlage. Diese sorgen dadurch direkt im Zusammenspiel mit dem Zylinderblock beziehungsweise dem Zylinderkopf sowie der innenliegend angeordneten dritten Funktionslage für einen Aufbau einer ausreichenden Spannung, die die Gasdichtigkeit der Zylinderkopfdichtung sicherstellt.

Indem die Stopperlage zur dritten Funktionslage hin umgekröpft ist, wird weiterhin erreicht, daß die Vollsicke dieser Funktionslage nicht vollständig zusammengedrückt werden kann, sondern vielmehr auch bei stärksten Schwingungen eine Restkompensationskraft für insbesondere dynamische Schwingungen für die Zylinderkopfdichtung zur Verfügung stellt.

Eine besonders gleichmäßige Beanspruchung der Zylinderkopfdichtung im Betrieb ergibt sich, wenn der Scheitelpunkt der Vollsicke der ersten Funktionslage wie auch der Scheitelpunkt der dritten Funktionslage der Stopperlage zugewandt sind. Beide Vollsicken sind dadurch in der Lage, einen Schwingungskörper zu bilden, der in Form von gekoppelten Schwingungen in der Lage ist, angreifende Spannungen an der einen Außenlage wie auch der anderen Außenlage gemeinsam ausgleichen zu können.

Weitere vorteilhafte Ausgestaltungen und Weiterbildung sowie Merkmale sind in der nachfolgenden Zeichnung und ihrer Beschreibung angegeben.

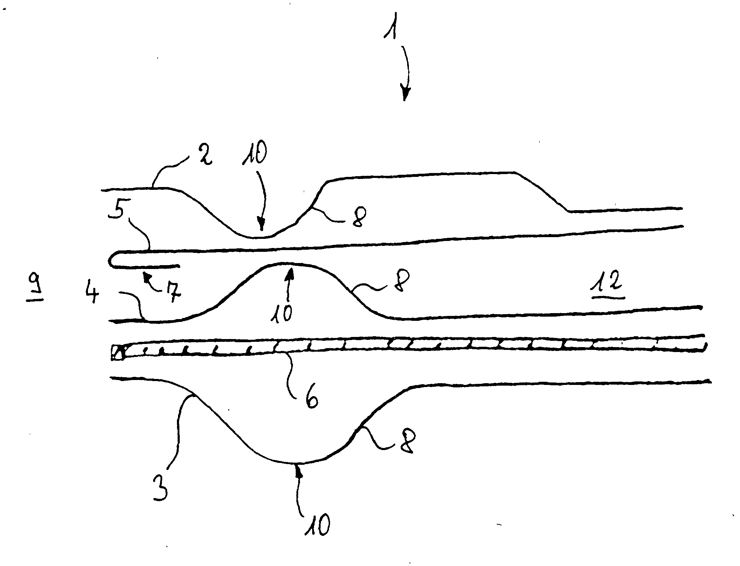

Es zeigt die Figur der Zeichnung eine Schnittansicht durch eine Zylinderkopfdichtung, die aus fünf Lagen besteht.

Eine mehrlagige Zylinderkopfdichtung 1 hat eine erste Funktionslage 2, eine zweite Funktionslage 3 und eine dritte Funktionslage 4. Die Funktionslagen 2, 3, 4 sind mittels einer Stopperlage 5 und einer Distanzlage 6 voneinander getrennt, wobei die erste 2 und die zweite 3 Funktionslage jeweils eine Außenlage der Zylinderkopfdichtung 1 bilden. Die Stopperlage 5 weist mindestens eine Umkröpfung 7 auf, die der dritten Funktionslage 4 zugewandt ist. Alle drei Funktionslagen 2, 3, 4 weisen jeweils eine Vollsicke 8 auf, die gegenüberliegend zu einer Brennraumöffnung 9 einer Verbrennungskraftmaschine, die nicht näher dargestellt ist, angeordnet sind. Die Vollsicken 8 weisen jeweils einen Scheitelpunkt 10 auf, die radial übereinander liegend angeordnet sind. Dabei können jedoch auch gewisse tolerierbare Abweichungen vorhanden sein.

### Bezugszeichenliste

- 1: Zylinderkopfdichtung
- 2: erste Funktionslage
- 3: zweite Funktionslage
- 4: dritte Funktionslage
- 5: Stopperlage
- 6: Distanzlage
- 7: Umkröpfung
- 8: Vollsicke
- 9: Brennraumöffnung
- 10: Scheitelpunkt
- 12: Inneres der Zylinderkopfdichtung

## Patentansprüche

1. Mehrlagige Zylinderkopfdichtung (1) mit
- zumindest einer ersten (2) und einer zweiten (3) Funktionslage, die jeweils eine Vollsicke (8) gegenüberliegend zu einer Brennraumöffnung (9) in der Zylinderkopfdichtung (1) aufweisen, und
- mit zumindest einer Distanzlage (6),
wobei die Scheitelpunkte (10) der Vollsicken (8) der ersten (2) und der zweiten Funktionslage (3) in eine gemeinsame Richtung weisen,
**dadurch gekennzeichnet, daß**
die Zylinderkopfdichtung (1) den folgenden Lagenaufbau in der genannten Reihenfolge aufweist:
- die erste Funktionslage (2),
- eine Stopperlage (5),
- eine dritte Funktionslage (4) mit einer Vollsicke (8),
- die Distanzlage (6) und
- die zweite Funktionslage (3),
wobei die Vollsicken (8) mit ihren jeweiligen Scheitelpunkten (10) radial zumindest näherungsweise miteinander fluchten.

2. Zylinderkopfdichtung (1) nach Anspruch 1, **dadurch gekennzeichnet, daß** die erste (2) und die zweite Funktionslage (3) jeweils eine Außenlage der Zylinderkopfdichtung (1) bilden.

3. Zylinderkopfdichtung (1) nach Anspruch 1 oder 2, **dadurch gekennzeichnet, daß** die Stopperlage (5) zur dritten Funktionslage (4) hin umgebördelt ist.

4. Zylinderkopfdichtung (1) nach Anspruch 1, 2 oder 3, **dadurch gekennzeichnet, daß** der Scheitelpunkt (10) der Vollsicke (8) der ersten Funktionslage (2) und der Scheitelpunkt (10) der dritten Funktionslage (4) der Stopperlage (5) zugewandt sind.

5. Zylinderkopfdichtung (1) nach einem der vorhergehenden Ansprüche, **dadurch gekennzeichnet, daß** die Zylinderkopfdichtung (1) aus fünf Lagen (2, 3, 4, 5, 6) besteht.

## Claims

1. Multilayer cylinder head gasket (1) with
- at least one first (2) and one second (3) functional layer, which each comprise a solid bead (8) opposite a combustion chamber opening (9) in the cylinder head gasket (1), and
- with at least one spacer layer (6),
wherein the vertices (10) of the solid beads (8) of the first (2) and the second (3) functional layer point in a common direction,
**characterised in that**
the cylinder head gasket (1) has the following layer structure in the indicated order:
- the first functional layer (2),
- a stopper layer (5),
- a third functional layer (4) with a solid bead (8),
- the spacer layer (6) and
- the second functional layer (3),
wherein the solid beads (8) are at least approximately in alignment with one another radially by way of their respective vertices (10).

2. Cylinder head gasket (1) according to Claim 1, **characterised in that** the first (2) and the second (3) functional layer each form an outer layer of the cylinder head gasket (1).

3. Cylinder head gasket (1) according to Claim 1 or 2, **characterised in that** the stopper layer (5) is flanged towards the third functional layer (4).

4. Cylinder head gasket (1) according to Claim 1, 2 or 3, **characterised in that** the vertex (10) of the solid bead (8) of the first functional layer (2) and the vertex (10) of the third functional layer (4) face the stopper layer (5).

5. Cylinder head gasket (1) according to any one of the preceding Claims, **characterised in that** the cylinder head gasket (1) consists of five layers (2, 3, 4, 5, 6).

## Revendications

1. Joint multicouche (1) de culasse de cylindre, avec
- au moins une première couche fonctionnelle (2) et une deuxième couche fonctionnelle (3), comportant chacune une moulure pleine (8) située en face d'un orifice (9) de chambre d'explosion pratiqué dans le joint (1) de culasse de cylindre, et
- au moins une couche d'écartement (6),
les sommets (10) des moulures pleines (8) de la première couche fonctionnelle (2) et de la deuxième couche fonctionnelle (3) étant orientés dans une direction commune,
**caractérisé en ce que**
le joint (1) de culasse de cylindre présente la structure à couches suivante dans l'ordre de succession indiqué :
- la première couche fonctionnelle (2),
- une couche de butée (5),
- une troisième couche fonctionnelle (4) avec une moulure pleine (8),
- la couche d'écartement (6), et
- la deuxième couche fonctionnelle (3),
les moulures pleines (8) étant radialement alignées entre elles par leurs sommets (10) respectifs, au moins approximativement.

2. Joint (1) de culasse de cylindre selon la revendication 1, **caractérisé en ce que** la première couche fonctionnelle (2) et la deuxième couche fonctionnelle (3) constituent chacune une couche extérieure du joint (1) de culasse de cylindre.

3. Joint (1) de culasse de cylindre selon la revendication 1 ou 2, **caractérisé en ce que** la couche de butée (5) est repliée vers la troisième couche fonctionnelle (4).

4. Joint (1) de culasse de cylindre selon la revendication 1, 2 ou 3, **caractérisé en ce que** le sommet (10) de la moulure pleine (8) de la première couche fonctionnelle (2), et le sommet (10) de la troisième couche fonctionnelle (4), sont orientés vers la couche de butée (5).

5. Joint (1) de culasse de cylindre selon l'une quelconque des revendications précédentes, **caractérisé en ce que** le joint (1) de culasse de cylindre est constitué de cinq couches (2, 3, 4, 5, 6).
